# EUROPÄISCHE PATENTSCHRIFT

(11) **EP 1 947 004 B1**
(45) Veröffentlichungstag und Bekanntmachung des Hinweises auf die Patenterteilung: **07.01.2009**
(21) Anmeldenummer: 08006812.5
(22) Anmeldetag: 03.08.2005
(51) Int. Cl.: B62M 25/04

(54) **Verstelleinrichtung für Triggerschalter**
Adjustment device for trigger switches
Dispositif de réglage pour manettes de dérailleur

(30) Priorität: 04.08.2004 DE 102004037741
(43) Veröffentlichungstag der Anmeldung: 23.07.2008
(62) Teilanmeldung aus: 05016841.8
(73) Patentinhaber: SRAM Deutschland GmbH, 97404 Schweinfurt (DE)
(72) Erfinder: McLaughlin, Scott, 97424 Schweinfurt (DE); Böhm, Robert, Dipl.-Ing., 97453 Mainberg (DE); Weiss, Martin, Dipl.-Ing., 97424 Schweinfurt (DE)
(74) Vertreter: Prechtel, Jörg

(56) Entgegenhaltungen:
- DE-A1- 3 405 421
- US-A- 4 046 025

## Beschreibung

Die Erfindung betrifft einen Schalter zur Betätigung eines Getriebes an einem Fahrrad, gemäß dem Oberbegriff des Anspruches 1.

Aus der EP 1 270 396 A2 geht ein derartiger Triggerschalter zur Betätigung einer Schaltung hervor, der neben einem Bremshebel auf einem Lenker montiert ist, wobei die Bedienungshebel des Triggerschalters zu einem Griffteil am Lenker in einer allgemein günstigen ergonomischen Position stehen, aber hinsichtlich einer individuellen Einstellbarkeit unter Berücksichtigung der unterschiedlichen Größen der Hände der bedienenden Fahrer nicht ausreichend viele Verstellmöglichkeiten haben. Die Befestigung des Triggerschalters lässt lediglich seine Verschiebung in Längsrichtung und seine Verdrehung um die Mittelachse des Lenkers zu. Außerdem liegen die Positionen der drei Elemente, nämlich des Triggerschalters, des Bremshebels und des Griffteils von vornherein fest.

Aus der DE-A-34 05 421 ist ein Schalter bekannt mit zwei Schalthebeln, die an einem Lagerbock schwenkbar gelagert sind. Der Lagerbock ist mit einer am Fahrradrahmen anbringbaren Schelle fest verschraubt. Die beiden Schalthebel sind jeweils mit einem Schaltseil verbunden, um einen Umwerfer einer vorderen bzw. hinteren Kettenschaltung wahlweise umschalten zu können. Reibungsscheiben halten die Schalthebel in der jeweils gewünschten Schwenkstellung.

Ein aus der JP-A-63-315390 (1988) bekannter Schalter mit einem einzigen Schalthebel ist an einem Arm wahlweise in einer von drei möglichen Positionen befestigbar. Der Arm wiederum steht an der vom Griffteil des Lenkers abgewandten Seite eines Bremshebelträgers ab, welcher Träger am Lenker über eine Schelle, die Bremsbandage, befestigt ist. Auch der aus der JP-A-2-31993 (1990) bekannte Schalter mit lediglich einem Hebel ist am Bremshebelträger auf der griffabgewandten Seite befestigt und zwar über einen vom Schalter abstehenden Bolzen, der in eine Bohrung des Bremshebelträgers eingesteckt wird und der innerhalb der Bohrung mittels Madenschraube in wahlweiser Position fixiert werden kann.

Die JP-U1-134591 (1989) schließlich zeigt einen Schalter mit nur einem Hebel mit einer Exzenterverbindung zwischen Hebelträger und Hebel mit zur Lenker-Längsrichtung senkrechter Exzenterachse, die eine dementsprechende Positionsverlagerung der Hebelschwenkachse längs des Exzenterkreises zulässt.

Dem gegenüber wird ein Schalter mit den Merkmalen des Anspruchs 1 vorgeschlagen, der eine individuelle, Einstellbarkeit der Position des Spannhebels und des Freigabehebels relativ zu der Lage des Griffteils ermöglicht. Die variable Befestigung einer Schelle am Schaltergehäuse bewirkt, dass die Schelle des Schaltergehäuses entweder direkt neben dem Griffteil am Lenker montiert werden kann, oder aber erst im Anschluss an eine Bremsbandage des Handbremshebels, wobei die Schelle am Schaltergehäuse in ihrer Position veränderbar ist. Das Schaltergehäuse weist einen Sockel mit mindestens zwei Bohrungen auf, die voneinander einen Abstand aufweisen, der es erlaubt, das Schaltergehäuse gegenüber der Schelle parallel zum Lenker in mindestens einer Stufe zu versetzen. Der Sockel kann eine zum Griffteil des Lenkers vorzugsweise parallele Längsführung aufweisen, auf der die Schelle verschoben und an einer der Bohrungen mittels der Schraube auf der Längsführung befestigt werden kann. Es folgt nun die Entscheidung, ob die Schelle auf dem Lenker zwischen dem Griffteil und einer Bremsbandage montiert werden soll oder auf der dem Griffteil abgewandten Seite der Bremsbandage, da möglicherweise der mit der Bremsbandage befestigte Bremsgriff aus ergonomischen Gründen nahe am Griffteil montiert werden muss. Ist letztere Konstellation der Fall, dann kann der durch die Breite der Bremsbandage verursachte Abstand der Schelle zu dem Griffteil dadurch verkleinert werden, dass die Schelle am Schaltergehäuse durch Eindrehen der Schraube in die vom Griffteil entfernter liegende Bohrung fixiert wird. Hierdurch nähern sich die Betätigungsfläche und die Kontaktfläche dem Griffteil an. Muss aber die Schelle auf dem Lenker zwischen dem Griffteil und der Bremsbandage montiert werden, so kann die Schelle am Schaltergehäuse über die dem Griffteil naheliegende Bohrung verbunden werden. Einerlei welche Entscheidung sich in dem jeweiligen Fall ergibt, es ist immer von einem auf dem Fahrrad sitzenden Fahrer zu prüfen, wie sich die gewählte Einstellung eignet. Immer ist nach Fertigstellung der Fahrradmontage eine Probefahrt durchzuführen, nach weicher Korrekturen am Schalter durch
- Lösen der Schraube und/oder der Spannschraube
- Verschieben der fraglichen Elemente
- Anziehen der Schraube
- Anziehen der Spannschraube
durchgeführt werden können.

Die Erfindung hat es sich also zur Aufgabe gemacht, einen Schalter am Lenker zum Schalten von Gangstufen in einem Fahrradgetriebe zu schaffen, der einen Spannhebel und einen Freigabehebel aufweist, die sich ungeachtet der konstruktiven Ausgestaltung des Lenkers mit einem Bremshebel und dessen Bremsbandage entsprechend den individuellen Anforderungen der Fahrer ergonomisch optimal bedienen fassen.

Die Lösung der Aufgabe ist in den kennzeichnenden Teilen des Hauptanspruches, beschrieben.

Anhand von mehreren Zeichnungen wird ein Schalter mit einer individuellen

Einstellbarkeit eines Spannhebels und eines Freigabehebels relativ zu einem Griffteil am Lenker des Fahrrades erläutert. Es zeigen:

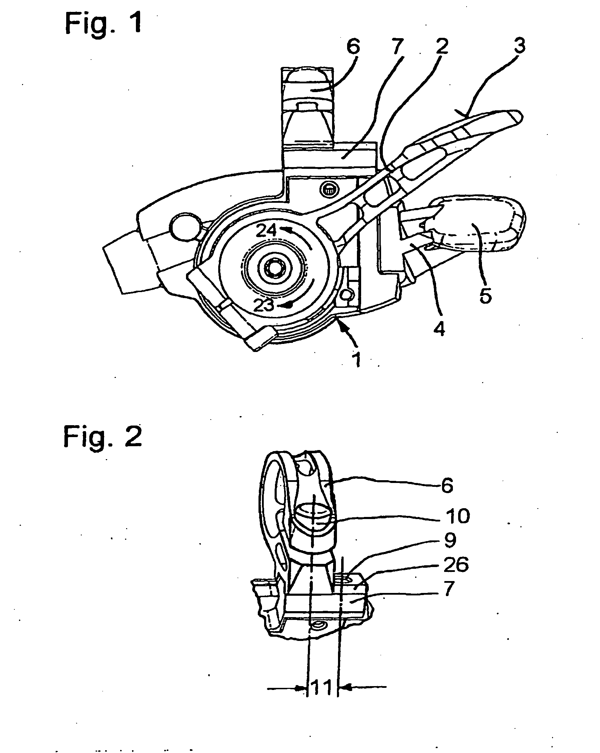

- Fig.1: einen Schalter mit einem Schaltergehäuse, einer Schelle, einem Spannhebel und einem Freigabehebel;
- Fig.2: die Anordnung der Schelle auf einem Sockel am Schaltergehäuse In einer Teilansicht;

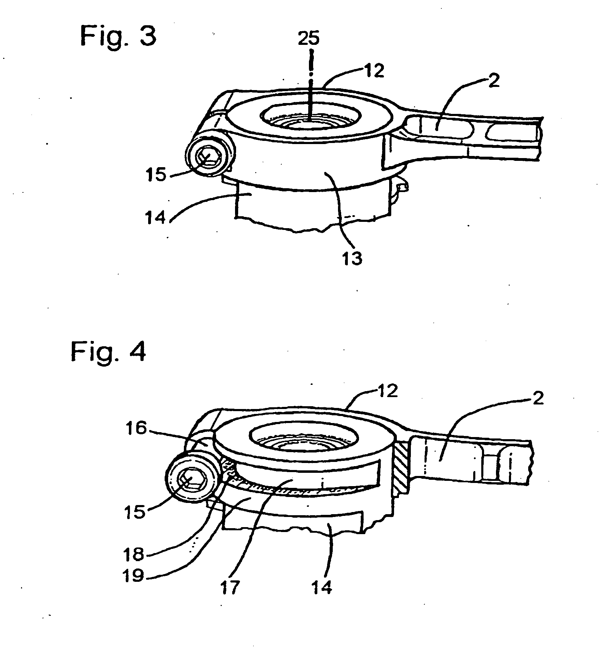

- Fig.3: den Spannhebel mit zwei Klemmarmen auf einem Mitnahmeteil in einer Teilansicht;
- Fig.4: das Mitnahmeteil mit einer Aussparung und Flanken zur Aufnahme eines Schaftes einer Spannschraube im Teilschnitt;

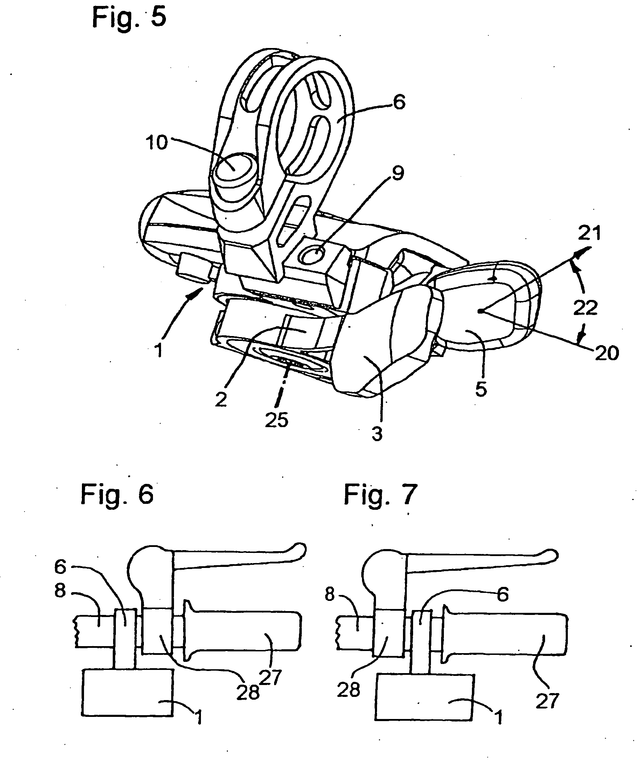

- Fig.5: die Anordnung der Schelle, des Spannhebels und des Freigabehebels am Schaltergehäuse mit der Angabe einer Betätigungsrichtung für den Freigabehebel in perspektivischer Ansicht;
- Fig.6: die Anordnung der Schelle mit dem Schaltergehäuse am Lenker zwischen einem Griffteil und einer Bremsbandage;
- Fig.7: die Anordnung der Schelle mit dem Schaltergehäuse am Lenker neben der Bremsbandage.

Wird mit 1 ein Schaltergehäuse bezeichnet, so ist dieses mittels einer Schelle 6 mit einem Lenker 8 verbunden und weist dieses ein mit einem Seilspeicher verbundenes Mitnahmeteil 14 auf, mit dem ein Spannhebel 2 mit einer Betätigungsfläche 3 verbunden ist. Der Spannhebel 2 weist einen ersten Klemmarm 12 und einen zweiten Klemmarm 13 auf, die sich um eine zylindrische Außenfläche 19 am Mitnahmeteil 14 legen lassen und miteinander durch eine Spannschraube 15 verbindbar sind. Die Spannschraube 15 weist einen Schaft 16 auf, der sich bei richtiger Montage des Spannhebels 2 in eine ringförmige Aussparung 17 mit zwei Flanken 18 an der Außenfläche 19 des Mitnahmeteils 14 anlegt, wobei ein Reibschluss zwischen dem Spannhebel 2 und dem Mitnahmeteil 14 hergestellt wird.

Der Spannhebel 2 wird in einer zu einer Drehachse 25 senkrecht stehenden Drehebene 20 betätigt, wickelt das Seil in einer Seilaufwickeldrehrichtung 23 auf den Seilspeicher auf und schaltet so stufenweise die einzelnen Gangstufen des Getriebes in einer ersten Schaltrichtung durch.

Das Schaltergehäuse 1 weist neben dem Spannhebel 2 einen Freigabehebel 4 auf, der mit dem Daumen an einer Kontaktfläche 5 bedient werden kann. Dieser Freigabehebel 4 dreht sich in einer Ebene, die zu der Drehebene 20 des Spannhebels 2 um einen Winkel 22 von 60° nach oben geneigt ist, so dass der bedienende Fahrer eigentlich eine zu der Bewegungsrichtung am Spannhebel 2 um 60° nach oben In Fahrtrichtung geneigte Bewegung In einer Betätigungsrichtung 21 machen müsste. Da der Freigabehebel 4 aber nur zur Freigabe des Seiles in einer Seilfreigabedrehrichtung 24 einen kleinen Anstoß braucht, geht die Daumenbewegung ins Leere, wenn die erste Berührung erfolgt Ist. Der Daumen rutscht also von der Kontaktfläche 5 ab, wenn die Schaltung erfolgt Ist. An diese Art, das Seil freizugeben und die Gangstufen entgegen der ersten Schaltrichtung zu schalten, gewöhnt sich ein Fahrer schnell und überlässt so dem Mechanismus das Schalten vollständig.

Zur vorbeschriebenen Ergonomie gehört auch die Verstellbarkeit der Schelle 6 gegenüber dem Schaltergehäuse 1, das gegenüber einem Griffteil 27 parallel zum Lenker 8 verschiebbar angeordnet sein muss, um das Schaltergehäuse 1 mit seinem Spannhebel 2 entweder direkt neben dem Griffteil 27 am Lenker 8 zu montieren, oder aber erst im Anschluss an eine Bremsbandage 28 eines Handbremshebels, wodurch die Betätigungsfläche 3 des Spannhebels 2 zum Griffteil 27 in eine günstige Position gebracht werden kann. Damit auch enge Abstufungen bei der Verschiebung des Schaltergehäuses 1 möglich sind, ist die Schelle 6 auf einem Sockel 7 am Schaltergehäuse 1 verschraubt, wobei der Sockel 7 eine Längsführung 26 und mindestens zwei Bohrungen 9 aufweist, in die eine Schraube 10 zur Befestigung der Schelle 6 eingedreht wird. Die beiden Bohrungen 9 weisen einen Abstand 11 voneinander auf, der es ermöglicht, die Schelle 6 wahlweise an der einen oder an der um diesen Abstand 11 versetzten anderen Bohrung 9 anzuordnen.

Der Vorteil des vorgeschlagenen Schalters liegt in der individuell an die Bedürfnisse den einzelnen Fahrers angepasste Einstellbarkeit des Schaltergehäuses 1 gegenüber dem Griffteil 27 am Lenker 8 durch unterschiedliche Anschlussstellen der Schelle 6 am Schaltergehäuse 1 sowie eine ergonomische Optimierung der Position der Betätigungsfläche 3 des Spannhebels 2 gegenüber der Kontaktfläche 5 des Freigabehebels 4 durch die frei wählbare Anordnung des Spannhebels 2 auf dem mit dem Seilspeicher verbundenen Mitnahmeteil 14 durch eine Klemmbefestigung. Schließlich wird noch ein Verfahren, zur Einstellung des Schalters, der aus dem Schaltergehäuse 1 mit der Schelle 6, dem Spannhebel 2 mit der Betätigungsfläche 3 und dem Freigabehebel 4 mit der Kontaktfläche 5 besteht, vorgeschlagen, um die bestmögliche Ergonomie bei der Bedienung zu erzielen, wobei das Verfahren durch die folgenden Schritte gekennzeichnet ist:
* Eine Entscheidung wird getroffen, ob die Schelle 6 auf dem Lenker 8 zwischen dem Griffteil 27 und der Bremsbandage 29 montiert werden soll oder auf der dem Griffteil 27 abgewandten Seite der Bremsbandage 29 unter Berücksichtigung der optimalen Lage der Kontaktfläche 3 relativ zur Lage des Daumens des Fahrers während der Fahrt;
* Die Schelle 6 wird am Schaltergehäuse 1 durch Eindrehen der Schraube 10 in die aus der Entscheidung resultierende Bohrung 9 befestigt;
* Die Schelle 6 wird mit dem Schaltergehäuse 1 auf den Lenker 8 aufgeschoben;
* Die Bremsbandage 29 wird auf den Lenker 8 vor oder nach der Schelle 6 je nach dem Resultat aus der vorausgegangenen Entscheidung aufgeschoben;
* Der Griffteil 27 wird aufgeschoben;
* Der Spannhebel 2 wird auf dem Mitnahmeteil 14 mittels der Spannschraube 15 in den Klemmarmen 12 und 13 locker befestigt;
* Die Schraube 10 zur Fixierung des Schaltergehäuses 1 wird nach Prüfung durch den auf dem Fahrrad sitzenden Fahrer angezogen;
* Die Spannschraube 15 wird nach Prüfung der Position der Betätigungsfläche zu der Kontaktfläche 5 durch den Fahrer angezogen;
* Nach einer Probefahrt werden die Klemmverbindungen durch Lösen und wieder Anziehen der Schraube (10) und/oder der Spannschraube (15) korrigiert, falls erforderlich.

### Bezugszeichenliste

- 1: Schaltergehäuse
- 2: Spannhebel
- 3: Betätigungsfläche
- 4: Freigabehebel
- 5: Kontaktfläche
- 6: Schelle
- 7: Sockel
- 8: Lenker
- 9: Bohrung
- 10: Schraube
- 11: Abstand
- 12: erster Klemmarm
- 13: zweiter Klemmarm
- 14: Mitnahmeteil
- 15: Spannschraube
- 16: Schaft
- 17: Aussparung
- 18: Flanke
- 19: Außenfläche
- 20: Drehebene
- 21: Betätigungsrichtung
- 22: Winkel
- 23: Seilaufwickeldrehrichtung
- 24: Seilfreigabedrehrichtung
- 25: Drehachse
- 26: Längsführung
- 27: Griffteil
- 28: Bremsbandage

## Patentansprüche

1. Schalter zur Betätigung eines Getriebes an einem Fahrrad, umfassend ein Schaltergehäuse (1), einen Seilspeicher zum Aufwickeln eines Seiles zur Betätigung einzelner Gangstufen des Getriebes, einen Spannhebel (2) und einen Freigabehebel (4), wobei der Spannhebel (2) am Schaltergehäuse (1) zur Schaltung einzelner Gangstufen im Getriebe in einer Seilaufwickeldrehrichtung verdrehbar ist, während in einer Seilfreigabedrehrichtung durch die Betätigung des Freigabehebels (4) jeweils mindestens eine Gangstufe schaltbar ist, wobei das Schaltergehäuse (1) mit einer an einem Lenker (8) anbringbaren Schelle (6) versehen ist,
**dadurch gekennzeichnet,**
**dass** die Schelle (6) zum Schaltergehäuse (1) gesondert ausgebildet ist und dass das Schaltergehäuse (1) einen Sockel (7) mit mindestens zwei Bohrungen (9) zur Befestigung der Schelle (6) in unterschiedlichen Anbringpositionen am Schaltergehäuse (1) aufweist, wobei die Bohrungen (9) von einander eine parallel zum Lenker (8) verlaufenden Abstand (11) aufweisen.

## Claims

1. A shifter for operating a gear changing device on a bicycle, comprising a shifter housing (1), a cable spool for winding a cable for operating the individual gears of the gear changing device, a tensioning lever (2) and a releasing lever (4), wherein the tensioning lever (2) on the shifter housing (1) is rotatable for shifting individual gears in the gear changing device in a cable winding direction, whereas at least one gear change can be made in a cable releasing direction by operating the releasing lever (4), wherein the shifter housing (1) is provided with a clamp (6) attachable to a handlebar (8),
**characterised in that**
the clamp (6) is designed separately from the shifter housing (1) and **in that** the shifter housing (1) comprises a base (7) with at least two bores (9) for securing the clamp (6) in different attachment positions on the shifter housing (1), whereby the bores (9) are spaced apart (11) from one another parallel to the handlebar (8).

## Revendications

1. Commutateur destiné à actionner une boîte de vitesses sur une bicyclette, comportant un boîtier de commutateur (1), un enroulement de câble destiné à enrouler un câble pour actionner chaque vitesse de la boîte de vitesses, un levier de serrage (2) et un levier de libération (4), le levier de serrage (2) sur le boîtier de commutateur (1) pouvant être amené en rotation dans un sens de rotation d'enroulement de câble pour passer chaque vitesse dans la boîte de vitesses, tandis que dans un sens de rotation de libération du câble, grâce à l'actionnement du levier de libération (4), respectivement au moins une vitesse peut être passée, le boîtier de commutateur (1) étant pourvu d'une bride (6) pouvant être aménagée sur un guidon (8),
**caractérisé en ce que**
la bride (6) est conçue séparément du boîtier de commutateur (1) et **en ce que** le boîtier de commutateur (1) comprend un socle (7) doté d'au moins deux alésages (9) destinés à fixer la bride (6) dans différentes positions sur le boîtier de commutateur (1), les alésages (9) présentant, l'un par rapport à l'autre, un écart (11), parallèlement au guidon (8).
